(19)

Europäisches
Patentamt
European
Patent Office
Office européen
des brevets

(11)  EP 1 932 883 A1

(12)  EUROPEAN PATENT APPLICATION
published in accordance with Art. 153(4) EPC

(43) Date of publication:
    18.06.2008  Bulletin 2008/25

(51) Int Cl.:
    *C08L 67/00* (2006.01)    *C08F 2/22* (2006.01)
    *C08F 212/06* (2006.01)    *C08F 220/06* (2006.01)

(21) Application number: 06810280.5

(22) Date of filing: 19.09.2006

(86) International application number:
    PCT/JP2006/318538

(87) International publication number:
    WO 2007/040041 (12.04.2007 Gazette 2007/15)

(84) Designated Contracting States:
    AT BE BG CH CY CZ DE DK EE ES FI FR GB GR
    HU IE IS IT LI LT LU LV MC NL PL PT RO SE SI
    SK TR

(30) Priority:  03.10.2005  JP 2005289653
              03.10.2005  JP 2005290153

(71) Applicant: Kaneka Corporation
    Kita-ku
    Osaka-shi, Osaka 530-8288 (JP)

(72) Inventor: SUNAGAWA, Takenobu
    Toyonaka-shi Osaka 5610872 (JP)

(74) Representative: Vossius & Partner
    Siebertstrasse 4
    81675 München (DE)

(54)  **THICKENERS FOR THERMOPLASTIC POLYESTER RESINS, THERMOPLASTIC POLYESTER RESIN COMPOSITIONS CONTAINING THE SAME, AND MOLDINGS OF THE COMPOSITIONS**

(57)     The present invention provides a viscosity modifier (A) for thermoplastic polyester resin obtainable by polymerizing (a) 70 to 95% by weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both; a viscosity modifier (A') for thermoplastic polyester resin **characterized by** covering 100 parts by weight of polymer particles (A-1) with 0.5 to 30 parts by weight of polymer particles (A-2), the polymer particle (A-1) are obtained by polymerizing (a) 70 to 95% by weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both and having a glass transition temperature of 60°C or higher and a volume-average particle diameter of 50 to 500 $\mu$m, and the polymer particles (A-2) have volume-average particle diameter of 0.01 to 0.5 $\mu$m; and a thermoplastic polyester resin composition and a molded article containing the viscosity modifier.

EP 1 932 883 A1

**Description**

TECHNICAL FIELD

The present invention relates to a viscosity modifier for thermoplastic polyester resin suitable for extrusion molding, calendering, blow molding, and injection molding of thermoplastic polyester resin, particularly for molding processability improvement in profile extrusion and extrusion molding of boards and pipes and blow molding. Further, the present invention relates to a thermoplastic polyester resin composition containing the viscosity modifier, excellent in molding processability, and useful for obtaining molded article excellent in transparency and gloss, as well as a molded article obtained from the composition.

BACKGROUND ART

Thermoplastic polyester resin is polymer excellent in physical characteristics such as transparency, mechanical properties, gas barrier properties and heat resistance, chemical properties such as solvent resistance, acid resistance, and alkali resistance, economical efficiency and recyclability, and is widely used in various fields, mainly as packing materials such as bottles. Particularly, by utilizing the surface properties, uses for profile extrusion and extrusion molding of sheets and films have been recently investigated.

On the other hand, in general, since having high temperature dependency of melt viscosity, thermoplastic polyester resin such as polyethylene terephthalate and polybutylene terephthalate have low melt viscosity in a temperature range not lower than their melting points and are disadvantageous in melt processing such as injection molding, extrusion molding, and blow molding which are carried out in such a temperature range.

In order to improve mold processability of thermoplastic polyester resin, conventionally, compounding a copolymers having compatibility with these resins as a melt viscosity adjuster (viscosity modifier) has been investigated.

For example, there have been disclosed a method of compounding a copolymer having weight average molecular weight of at least 500,000 and comprising a specific methacrylic acid ester to thermoplastic resin (reference to Patent Document 1), the method of compounding a copolymer having weight-average molecular weight of 1,000,000 to 4,000,000 and comprising styrene, glycidyl methacrylate, and (meth)acrylic esters to thermoplastic polyester resin (reference to Patent Document 2), the method of compounding a vinyl copolymer containing at least 5% by weight of glycidyl methacrylate to polyethylene terephthalate (reference to Patent Document 3), and the method of adding polyglycidyl methacrylate having weight-average molecular weight of at least 900 (reference to Patent Document 4).

However, it has been difficult to simultaneously satisfy both sufficiently increasing melt viscosity of thermoplastic polyester resin for achieving stable moldability in boards, profiles, and pipes, and retaining high transparency and gloss of moldings.

For example, in the case of compounding copolymer, as a viscosity modifier, obtained by copolymerization of monomers represented by glycidyl methacrylate having reactivity with thermoplastic polyester resin, the melt viscosity of the thermoplastic polyester resins is increased, however it sometimes results in undesirable tendency that the surface of obtained molded articles is whitened and the transparency and gloss are lowered.

Therefore, techniques for simultaneously satisfying stably mold processability in injection molding, extrusion molding, blow molding, and calendering and high transparency and gloss of molded articles have been strongly desired.

Further, since thermoplastic polyester resins are generally easy to be hydrolyzed to lower the molecular weight, the melt viscosity is further lowered and the melt processing becomes more difficult. Since the hydrolysis reaction of thermoplastic polyester resins is easily promoted by being affected with ionic foreign substances such as an emulsifier, it is disadvantageous to polymerize the viscosity modifier for thermoplastic polyester resin by an emulsion polymerization method in which an emulsifier remains much.

As a method for improving the problem, it is considered to select a suspension polymerization method in which any ionic foreign substance is scarcely used as a polymerization method of the viscosity modifier for thermoplastic polyester resin. However, in suspension polymerization, since a large quantity of a fine powder is generated, the solid-liquid separation property is worsened at the time of dewatering and there occurs a problem that the fine powder flows to the dewatering wastewater.

I Further, in the case of producing a polymer with a relatively low molecular weight as a viscosity modifier to improve the dispersibility in thermoplastic polyester resin, there occurs a problem that polymer is thermally fused in its drying process or that powder blocking property of a powder product is worsened.

Patent Document 1: Japanese Patent Application Laid-Open (JP-A) No. 1-268761
Patent Document 2: JP-A 6-41376
Patent Document 3: JP-A 62-187756
Patent Document 4: JP-A 62-149746

DISCLOSURE OF THE INVENTION

PROBLEMS TO BE SOLVED BY THE INVENTION

The present invention aims to provide a viscosity modifier for thermoplastic polyester resin which efficiently increase the melt viscosity of thermoplastic polyester resin, enables stable mold processability in extrusion molding, blow molding, calendering, and injection molding, particularly in extrusion molding of profiles, boards, pipes or the like with high difficulty, and gives molded articles excellent in transparency and gloss, as well as a thermoplastic polyester resin composition containing the viscosity modifier.

Further, the present invention aims to solve a problem of thermal fusion in a drying process at the time of producing low molecular weight polymer, a problem that a large quantity of fine powder is generated to result in worsening of filtration property at the time of dewatering in a suspension polymerization method, and a problem of decrease of melt viscosity of thermoplastic polyester resin attributed to hydrolysis in the case of mold processing of the thermoplastic polyester resin.

MEANS FOR SOLVING THE PROBLEMS

Under the above-mentioned state of art, the inventors of the present invention have made various investigations and have found that, in the case a product obtained by polymerizing a mixture containing specific types and amounts of monomers is compounded as a viscosity modifier for thermoplastic polyester resin, excellent viscosity increasing effect can be caused, and molded articles with excellent transparency and gloss can be obtained, and thus the above-mentioned problems can be solved. Accordingly, these findings now lead to completion of the present invention.

Therefore, the present invention relates to a viscosity modifier (A) for thermoplastic polyester resins obtainable by polymerizing (a) 70 to 95% by weight of an aromatic vinyl monomer, (b) 5 to 30% by weight of an alkyl acrylate containing an alkyl group having 1 to 8 carbon atoms, and (c) 0 to 10% by weight of other vinyl monomers copolymerizable with both [(a), (b), and (c) are in total 100% by weight].

Furthermore, the present invention relates to a viscosity modifier (A') for thermoplastic polyester resin comprises 100 parts by weight of polymer particles (A-1) obtained by polymerizing (a) 70 to 95% by weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both and having a glass transition temperature of 60°C or higher and a volume-average particle diameter of 50 to 500 $\mu$m, and 0.5 to 30 parts by weight of polymer particles (A-2) having volume-average particle diameter of 0.01 to 0.5 $\mu$m wherein the polymer particles (A-1) are covered with the polymer particles (A-2).

According to a preferable embodiment of the present invention, in any one of the viscosity modifiers for thermoplastic polyester resin, the monomers constituting the viscosity modifier (A) or polymer particles (A-1) are those free from epoxy group, isocyanato group, oxazoline group, hydroxy group, carboxy group, alkoxy group, acid anhydride group, or acid chloride group.

According to a preferable embodiment of the present invention, in any one of the viscosity modifiers for thermoplastic polyester resin, the alkyl acrylate (b) constituting the viscosity modifier (A) or polymer particles (A-1) is an alkyl acrylate having an alkyl group with 1 to 4 carbon atoms.

According to a preferable embodiment of the present invention, in any one of the viscosity modifiers for thermoplastic polyester resin, the alkyl acrylate (b) constituting the viscosity modifier (A) or polymer particles (A-1) is an alkyl acrylate having an alkyl group with 1 to 2 carbon atoms.

According to a preferable embodiment of the present invention, in any one of the viscosity modifiers for thermoplastic polyester resin, the weight average molecular weight of the viscosity modifier (A) or polymer particles (A-1) is 10,000 to 4,000,000.

According to a preferable embodiment of the present invention, in any one of the viscosity modifiers for thermoplastic polyester resin, the weight average molecular weight of the viscosity modifier (A) or polymer particles (A-1) is 10,000 to 400,000.

According to a preferable embodiment of the present invention, in any one of the viscosity modifiers for thermoplastic polyester resin, the refraction index of the viscosity modifier (A) or polymer particles (A-1) is 1.55 to 1.58.

According to a preferable embodiment of the present invention, in the viscosity modifier for thermoplastic polyester resin, the Vicat softening temperature of the polymer particles (A-2) is 80°C or higher.

According to a preferable embodiment of the present invention, in the viscosity modifier for thermoplastic polyester resins, the polymer particles (A-2) are obtained by emulsion-polymerizing 60 to 95 parts by weight of a mixture containing 50 to 95% by weight of methyl methacrylate, 5 to 50% by weight of alkyl methacrylate having an alkyl group with 2 to 8 carbon atoms, and 0 to 20% by weight of another vinyl monomer copolymerizable with them to give a polymer latex, and adding and polymerizing 5 to 40 parts by weight (in total 100 parts by weight) of another mixture containing 20 to 80% by weight of one or more monomers selected from alkyl methacrylates excluding alkyl acrylate and methyl methacrylate, 20 to 80% by weight of methyl methacrylate and 0 to 20% by weight of another vinyl monomer copolymerizable with them in the presence of the produced polymer latex.

According to a preferable embodiment of the present invention, in the viscosity modifier for thermoplastic polyester resin, the polymer particles (A-2) have at least three-layered structure formed by polymerizing a mixture containing methyl methacrylate, a copolymerizable monomer and a crosslinkable monomer followed by polymerizing a mixture containing alkyl acrylate, a copolymerizable monomer and a crosslinkable monomer in the presence of a polymer to obtain a double-layered polymer and further polymerizing a monomer mixture containing alkyl (meth)acrylate and a copolymerizable monomer in the presence of the double-layered polymer.

According to a preferable embodiment of the present invention, in the viscosity modifier for thermoplastic polyester resin, the polymer particles (A-2) are core-shell graft copolymer comprising (x) 40 to 90 parts by weight of a core of a butadiene type copolymer obtainable by polymerizing a monomer mixture containing 30 to 100% by weight of butadiene monomer, 0 to 70% by weight of aromatic vinyl monomer, 0 to 10% by weight of another vinyl monomer copolymerizable with them, and 0 to 5% by weight of a crosslinkable monomer, (y) 5 to 40 parts by weight of an inner layer shell formed by polymerizing a monomer mixture containing 60 to 98% by weight of aromatic vinyl monomer, 2 to 40% by weight of alkyl (meth)acrylate having hydroxyl or alkoxy group, and 0 to 10% by weight of another vinyl monomer copolymerizable with them, and (z) 5 to 20 parts by weight of an outer layer shell formed by polymerizing a monomer mixture containing 10 to 100% by weight of aromatic vinyl monomer, 0 to 90% by weight of alkyl (meth)acrylate having an alkyl group with 1 to 8 carbon atoms, and 0 to 50% by weight of another vinyl monomer copolymerizable with them [100 parts by weight in total of (x), (y) and (z)].

The present invention relates to a thermoplastic polyester resin composition comprising 0.1 to 50 parts by weight of any one of the above-mentioned, viscosity modifiers for thermoplastic polyester resin, based on 100 parts by weight of thermoplastic polyester resin (B).

According to a preferable embodiment of the present invention, in the thermoplastic polyester resin composition, the thermoplastic polyester resin (B) is a thermoplastic polyester resin containing polyalkylene terephthalate, polyalkylene naphthalene dicarboxylate, or a unit derived from at least one of dibasic acids and at least one or combinations of aliphatic diols or alicyclic diols.

According to a preferable embodiment of the present invention, in the thermoplastic polyester resin composition, the polyalkylene terephthalate is a polyethylene terephthalate or a co-polyester containing a unit derived from ethylene glycol, or cyclohexane dimethanol in combination with isophthalic acid.

The present invention relates to a molded article comprising the above-mentioned thermoplastic polyester resin composition.

According to a preferable embodiment of the present invention, the molded article is obtained by extrusion molding.

According to a preferable embodiment of the present invention, the molded article is obtained by calendering.

According to a preferable embodiment of the present invention, the molded article is obtained by blow molding.

According to a preferable embodiment of the present invention, the molded article is obtained by injection molding.

EFFECTS OF THE INVENTION

A viscosity modifier for the thermoplastic polyester resin of the present invention can remarkably increase the melt viscosity of the thermoplastic polyester resin at the time of mold processing.

A thermoplastic polyester resin composition containing the viscosity modifier for the thermoplastic polyester resin enables stable molding processability in extrusion molding, blow molding, calendering, and injection molding, and a molded article excellent in transparency and gloss can be obtained.

A thermoplastic polyester resin composition of the present invention by itself is easy to cause problems of thermal fusion in the drying process at the time of production and deterioration of powder blocking property when it is produced by, for example, a suspension polymerization method because it has a lower molecular weight and a low glass transition temperature, however if the surface is covered with polymer particles having volume-average particle diameter of 0.01 to 0.5 $\mu$m and obtained by an emulsion polymerization method, the aspect of the thermal fusion or the like can remarkably be improved.

BEST MODE FOR CARRYING OUT THE INVENTION

A viscosity modifier (A) for thermoplastic polyester resin of the present invention is characterized by being produced by polymerizing (a) 70 to 95% by weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both (a) and (b) [(a), (b), and (c) are in total 100% by weight].

Further, a viscosity modifier (A') for thermoplastic polyester resin of the present invention is characterized by covering 100 parts by weight of polymer particles (A-1) with 0-5 to 30 parts by weight of polymer particles (A-2), the polymer particles (A-1) are obtained by polymerizing (a) 70 to 95% weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both [wherein (a), (b) and (c) are in total 100% by weight] and having a glass transition temperature of 60°C or higher and a volume average particle diameter of 50 to 500 $\mu$m, the polymer particles (A-2) having volume-average particle diameter of 0.01 to 0.5 $\mu$m.

The viscosity modifier (A) or viscosity modifier (A') for thermoplastic polyester resins of the present invention, for example, when 0.1 to 50 parts by weight of the viscosity modifier (A) or viscosity modifier (A') is blended with 100 parts by weight of thermoplastic resin (B), can remarkably improve the melt viscosity at the time of melt processing in extrusion molding, blow molding, calendering, or injection molding, without deteriorating physical and chemical properties, particularly high transparency and gloss of molded articles obtained therefrom, which the thermoplastic polyester resin intrinsically has, and thus can significantly exert the expected effect.

The aromatic vinyl monomer (a) is not particularly limited and examples thereof may include styrene, $\alpha$-methylstyrene, and chlorostyrene. They may be used alone or two or more of them may be used in combination. It is preferable that these compounds are contained in an amount of 70 to 95% by weight, preferably 70 to 90% by weight, and more preferably 75 to 90% by weight in the above-mentioned viscosity modifier (A) or the polymer particles (A-1), in terms of the possibility of improving the melt viscosity of the thermoplastic polyester resin composition to a level capable of stable extrusion molding, blow molding, calendering, and injection molding, and also in terms of transparency.

The alkyl acrylate having an alkyl group with 1 to 8 carbon atoms may include methyl acrylate, ethyl acrylate, propyl acrylate, butyl acrylate, and 2-ethylhexyl acrylate, further preferable examples of the alkyl acrylate having an alkyl with 1 to 4 carbon atoms include methyl acrylate, ethyl acrylate, propyl acrylate, and butyl acrylate, furthermore preferable examples of the alkyl acrylate having an alkyl group with 1 to 2 carbon atoms include methyl acrylate and ethyl acrylate, and even more preferable example includes methyl acrylate. They may be used alone or two or more of them may be used in combination. It is preferable that these compounds are contained in an amount of 5 to 30% by weight, preferably 10 to 30% by weight, and more preferably 10 to 25% by weight in the above-mentioned viscosity modifier (A) or the polymer particles (A-1), in terms of the possibility of improving the melt viscosity of the thermoplastic polyester resin composition to a level capable of stable extrusion molding, blow molding, calendering, and injection molding.

Above mentioned other vinyl monomers (c) copolymerizable with them in the present invention are not particularly limited as long as they are vinyl monomers copolymerizable with and other than aromatic vinyl monomers (a) and the alkyl acrylate having an alkyl group with 1 to 8 carbon atoms (b), and examples thereof include alkyl methacrylate and vinyl cyanide monomers.

Examples of the alkyl methacrylate may include alkyl methacrylate having an alkyl group with 1 to 8 carbon atoms such as methyl methacrylate, ethyl methacrylate, propyl methacrylate, butyl methacrylate, and 2-ethylhexyl methacrylate, Further, examples of the above-mentioned vinyl cyanide monomers include acrylonitrile and methacrylonitrile. They may be used alone and two or more of them may be used in combination. It is preferable that these compounds are contained in an amount of 0 to 10% by weight, preferably 0 to 8% by weight, more preferably 0 to 5% by weight, and even more preferably 0 to 4% by weight in the above-mentioned viscosity modifier (A) or the polymer particles (A-1), in terms of the possibility of improving the melt viscosity of a thermoplastic polyester resin composition to a level capable of stable extrusion molding, blow molding, calendering, and injection molding.

Monomers to be employed for producing the viscosity modifier (A) or the polymer particles (A-1) of the viscosity modifier (A') of the present invention are preferably monomers having no functional group reactive with the thermoplastic polyester resin (B) and concrete examples thereof are preferably monomers having no reactive group such as epoxy group, isocyanato group, oxazoline group, hydroxy group, carboxyl group, alkoxy group, acid anhydride group, and acid chloride group. In the case the viscosity modifier (A) or the polymer particles (A-1) of the viscosity modifier (A') are produced by employing monomers having the above-mentioned reactive groups, although the viscosity-increasing effect on the melt viscosity of the thermoplastic polyester resin composition becomes excellent, the surface of a obtained molded article becomes white, and the transparency and gloss tend to be decreased in some cases.

The weight-average molecular weight of the viscosity modifier (A) or the polymer particles (A-1) of the viscosity modifier (A') for thermoplastic polyester resin of the present invention may be arbitrarily determined, if necessary, and in terms of the possibility of improving the melt viscosity of the thermoplastic polyester resin composition to a level of stable extrusion molding, blow molding, calendering, and injection molding, it is preferably 10,000 to 4,000,000. It is more preferably 10,000 to 2,500,000, furthermore preferably 10,000 to 400,000, and even more preferably 10,000 to 300,000. The above-mentioned weight-average molecular weight can be measured by, for example, dissolving a sample in tetrahydrofuran (THF) and measuring the soluble part by gel permeation chromatography (manufactured by WATERS, 510 model pump 410RI486 UV) using polystyrenes as standards (sample solution: 20 mg sample/10 mL THF, measurement temperature: 25°C, detector: differential reflection type one, injection amount: 1 mL).

EP 1 932 883 A1

The refraction index of the above-mentioned viscosity modifier (A) or polymer particles (A-1) in the present invention is not particularly limited, however to keep the excellent transparency of the thermoplastic polyester resin, it may be preferable to adjust in a range of 1.55 to 1.58. In the case the thermoplastic polyester resin is polyethylene terephthalate, the refraction index is more preferably adjusted to be 1.57 and in the case of PETG, which is an amorphous polyester resin, it is more preferably adjusted to be about 1.56. The refraction index in the present invention is a value measured by Abbe refractometer, however it can be found by calculation according to values disclosed in Document (Polymer Handbook, 4th edition, JOHN WILEY & SONS).

A process for preparing the viscosity modifier (A) of the present invention is not particularly limited and the viscosity modifier can be prepared by, for example, a suspension polymerization method, an emulsion polymerization method, a solution polymerization method, or the like.

For example, in the case the viscosity modifier (A) is prepared by an emulsion polymerization method, the monomer mixture may be emulsion-polymerized in the presence of a suitable medium, emulsifier, chain transfer agent polymerization initiator, and the like. The medium to be used in the emulsion polymerization method is usually water.

As the emulsifier, conventionally known emulsifiers may be used. Examples may include anionic surfactants such as fatty acid salt, alkyl sulfate, alkyl benzene sulfonate, alkyl phosphate and sulfosuccinate diester, and nonionic surfactants such as polyoxyethylene alkyl ether and polyoxyethylene fatty acid ester.

The polymerization initiator is not particularly limited and aqueous and oil-soluble polymerization initiators may be used.
For example, common inorganic polymerisation initiators such as persulfates, organic peroxides or azo compounds may be used alone, or combination of these polymerization initiator compounds with sulfites, thiosulfates, primary metal salts or sodium formaldehyde sulfoxylate may be used in the redox system. Preferable examples of persulfates may include sodium persulfate, potassium persulfate, and ammonium persulfate, and preferable examples of organic peroxides may include t-butyl hydroperoxide, cumene hydroperoxide, benzoyl peroxide, and lauroyl peroxide.

The chain transfer agent is not particularly limited and examples to be used may include alkyl mercaptans such as t-dodecyl mercaptan, n-dodecyl mercaptan, t-decyl mercaptan, n-decyl mercaptan, and n-octyl mercaptan; and alkyl ester mercaptan such as 2-ethyl hexyl thioglycolate.

The temperature and time of the above-mentioned polymerization reaction are also not particularly limited and may be adjusted accordingly in order to obtain the desired weight-average molecular weight depending on the intended use.

The viscosity modifier (A) to be used for the thermoplastic polyester resin composition of the present invention may be a one-step polymer or a multi-step polymer, such as a two-step polymer or three-step polymer. In the case that the viscosity modifier (A) is prepared in a two-step polymerization, at the time of adding a monomer in the second-step polymerization or thereafter, the addition is carried out after confirming that the polymerization of the monomers in the first-step has been completed, so that the second-stage polymerization can be carried out without mixing the monomers in the first-step.

The particles in polymer latex obtained by the emulsion polymerization in such a manner usually have a volume-average particle diameter of about 100 to 3000 angstroms and may be collected from the latex by the usual method af salting out or coagulating by adding an electrolyte to the latex, or by spraying the latex in hot air and drying. Further, if necessary, polymer particles of a viscosity modifier (B) may be washed, dehydrated, and dried by a common method.

A process for preparing the viscosity modifier (A) or the polymer particles (A-1) of the viscosity modifier (A') of the present invention is not particularly limited, however in terms of the effect of suppressing the lowering of melt viscosity due to hydrolysis of the thermoplastic polyester resin, it is preferable to produce them by a suspension polymerization method. As compared with polymer particles prepared by an emulsion polymerization method, it is made possible for the polymer particles prepared by a suspension polymerization method to decrease ionic foreign matter remaining in the polymer to be obtained, so that the total amount of the ionic foreign matter remaining in the viscosity modifier (A) or (A') of the present invention can be decreased. Due to the decrease of the ionic foreign matter amount, hydrolysis of the thermoplastic polyester resins is suppressed and lowering of the melt viscosity can be suppressed.

With respect to the viscosity modifier (A') of the present invention, the obtained polymer particles (A-1) are preferable to be covered with polymer particles (A-2) separately produced by an emulsion polymerization method or the like in terms of improvement of powder blocking property of the viscosity modifier (A) of the present invention. Vicat softening temperature of the above-mentioned polymer particles (A-2) is preferably 80°C or higher, further preferably 85°C or higher, and furthermore preferably 90°C or higher in terms of improvement of the powder blocking property. In this connection, the Vicat softening temperature means a temperature at which a plastic specimen starts deforming in the case a load is applied to the specimen and temperature is increased at a constant rate and for example, it can be measured by JIS K-7206 A, 50 method (test load 10 N, initial temperature 50°C, temperature increase rate 50°C/hr).

In the case the viscosity modifier (A) or the polymer particles (A-1) of the viscosity modifier (A') are prepared by, for example, a suspension polymerization method, the polymerization of monomer mixture may be carried out in the presence of a suitable medium, a dispersion stabilizer, a polymerization initiator, and if necessary, a chain transfer agent by a conventionally known method. The medium to be used in the suspension polymerization method is usually water.

As the dispersion stabilizer, conventionally known inorganic type dispersant and organic type dispersant may be used. Examples of the inorganic type dispersants include magnesium carbonate and calcium tertiary phosphate, and examples of organic type dispersants include natural and synthesized polymer dispersants such as starch, gelatin, acrylamide, partially saponified polyvinyl alcohol, partially saponified polymethylmethacrylate, polyacrylic acid and its salts, cellulose, methyl cellulose, hydroxymethyl cellulose, hydroxyethyl cellulose, polyalkylene oxides, polyvinyl pyrrolidone, polyvinyl imidazole, and sulfonated polystyrene as well as low molecular weight dispersants or emulsifiers such as alkylbenzenesulfonic acid salts and fatty acid salts.

The polymerization initiator is not particularly limited and conventionally known oil-soluble polymerization initiators can be used. For example, common organic peroxides and azo compounds may be used alone or two or more of them may be used in combination. Examples of preferable organic peroxides include benzoyl peroxide and lauroyl peroxide. Examples of preferable azo compounds include azobisisobutyronitrile, azobis(2-methylbutyronitrile), azobis-2,4-dimethylvaleronitrile.

The chain transfer agent is not particularly limited and for example alkyl mercaptan such as t-dodecyl mercaptan, n-dodecyl mercaptan, t-decyl mercaptan, n-decyl mercaptan, and n-octyl mercaptan; and alkyl ester mercaptans such as 2-ethylhexyl thioglycolate may be used. Among them, in terms of no odor generation at the time of molding process, alkyl ester mercaptans such as 2-ethylhexyl thioglycolate are preferable.

The temperature and time at the time of the polymerization reaction are not particularly limited and may be adjusted arbitrarily to be desired values depending on the purposes.

As a preparing method by the suspension polymerization, conventionally known techniques as follows may be employed, that is, a method of starting polymerization reaction after a monomer or a monomer mixture is suspended in water, or a method of starting polymerization reaction after a portion of a monomer or a monomer mixture is suspended in water, and successively polymerization reaction is carried out by adding a water suspension of the remaining monomer or monomer mixture in single-step, separately in several-steps, or continuously to a polymerization reaction vessel.

In the present invention, the polymer particles (A-1) of the viscosity modifier (A') is preferable to have a volume-average particle diameter in a range of 50 to 500 $\mu$m. If the volume-average particle diameter is smaller than 50 $\mu$m, the amount of the polymer particles (A-2) per unit volume of the polymer particles (A-1) for covering the (A-1) with the (A-2) tends to increase too much and, it tends to be disadvantageous consequence in terms of the ionic foreign matter, deteriorate in the filtration property at the time of dewatering after polymerization, and decrease drying efficiency due to high water content in the resin after dehydrating. On the other hand, in the case the volume-average particle diameter of the polymer particles (A-1) is larger than 500 $\mu$m, it tends to become difficult to control the weight average molecular weight of the polymer particles. For example, the volume average particle diameter of polymer particles obtained by suspension polymerization and having a volume average particle diameter in a range of 50 to 500 $\mu$m can be measured by using a particle size analyzer Micro Track FRA manufactured by Nikkiso Co., Ltd.

In the present invention, in terms of thermal fusion property and powder blocking property in the drying process, the above-mentioned polymer particles (A-1) are preferable to have a glass transition temperature of 60°C or higher and more preferably 70°C or higher.

Next, the polymer particles (A-2) for covering the polymer particles (A-1) in the viscosity modifier (A') for thermoplastic polyester resins of the present invention will be described The polymer particles (A-2) are not particularly limited as long as they have a volume-average particle diameter in a range of 0.01 to 0-5$\mu$ m, and those which are widely used as a quality modifier for thermoplastic polyester resin are preferable since an effect of improving various qualities derived from them (quality modifier) may be exerted and the productivity may improved even in the case that they are recovered as viscosity modifier (A')- Practically, they are preferably emulsion-polymerized polymers obtained by emulsion polymerization of vinyl type monomers.

As the polymer particles (A-2), preferably employed may be, for example, (1) an emulsion polymerized polymer obtained by polymerizing 60 to 95 parts by weight of a mixture containing 50 to 95% by weight of methyl methacrylate, 5 to 50% by weight of alkyl methacrylate having an alkyl group with 2 to 8 carbon atoms, and 0 to 20% by weight of another vinyl monomer copolymerizable with them to give a polymer latex, and adding and polymerizing 5 to 40 parts by weight (so that the total amount of mixtures become 100 parts by weight) of another mixture containing 20 to 80% by weight of one or more monomers selected from alkyl methacrylates excluding alkyl acrylate and methyl methacrylate, 20 to 80% by weight of methyl methacrylate and 0 to 20% by weight of vinyl monomer copolymerizable with them in the presence of the produced polymer latex; (2) an emulsion-polymerized polymer having at least three-layer structure obtained by further polymerizing a monomer mixture containing alkyl (meth)acrylate and a copolymerizable monomer in the presence of a double-layer polymer which is obtained by polymerizing a mixture containing alkyl acrylate, a copolymerizable and a crosslinkable monomer in the presence of a polymer which is obtained by polymerizing a monomer mixture containing methyl methacrylate, a copolymerizable monomer and a crosslinkable monomer; and (3) an emulsion-polymerized polymer, which is core-shell graft copolymer comprising (x) 40 to 90 parts by weight of a core of a butadiene type copolymer formed by polymerizing a monomer mixture containing 30 to 100% by weigh of butadiene monomer, 0 to 70% by weight of aromatic vinyl monomer, 0 to 10% by weight of another vinyl monomer copolymerizable with them, and 0 to 5% by weight of a crosslinkable monomer, (y) 5 to 40 parts by weight of an inner layer shell formed by polymerizing a monomer mixture containing 60 to 98% by weight of aromatic vinyl monomer, 2 to 40% by weight of alkyl (meth) acrylate with hydroxyl group or alkoxy group, and 0 to 20% by weight of another vinyl monomer copolymerizable with them, and (z) 5 to 20 parts by weight of an outer layer shell formed by polymerizing a monomer mixture containing 10 to 100% by weight of aromatic vinyl monomer, 0 to 90% by weight of alkyl (meth)acrylate having an alkyl group with 1 to 8 carbon atoms, and 0 to 50% by weight of another vinyl monomer copolymerizable with them (100 parts by weight in total of (x), (y) and (z)). A common production method of the emulsion polymerized polymers described in the above-mentioned (1) to (3) is described in detail in JP-A No. 2-269755 however the method is not limited thereto.

The volume-average particle diameter of the polymer particles (A-2) is preferably in a range of 0.01 to 0.5 $\mu$m and more preferably in a range of 0.05 to 0.5 $\mu$m in terms of the coating efficiency. The volume-average particle diameter of the polymer particles having a volume-average particle diameter in a range of 0.01 to 0.5 $\mu$m can be measured by light scattering of light having wavelength of 546 nm by using U-2000 Spectrophotometer manufactured by Hitachi Ltd.

The preparing method of the viscosity modifier (A') of the present invention is not particularly limited, for example, covering the polymer particles (A-1) with the polymer particles (A-2) may be carried out efficiently by mixing a suspension of polymer particles (A-1) with a volume-average particle diameter of 50 to 500 $\mu$m produced by suspension polymerization and the latex of polymer particles (A-2) with a volume average particle diameter of 0.01 to 0.5 $\mu$m prepared by emulsion polymerization and bringing the obtained mixture into contact with an aqueous electrolyte solution. Herein, covering means to cover the surface of polymer particles with other polymer particles and for example, softer polymer particles are covered with harder polymer particles to prevent adhesion of polymer particles and fusion between polymer particle powders in a drying apparatus.

A mixing method of the polymer particles (A-1) with a volume-average particle diameter of 50 to 500 $\mu$m and the latex of polymer particles (A-2) with a volume- average particle diameter of 0.01 to 0.5 $\mu$m is not particularly limited, and it is preferable to carry out the method by adding the latex of the polymer particles (A-2) under stirring the suspension of the polymer particles (A-1), or adding the suspension of the polymer particles (A-1) under stirring the latex of the polymer particles (A-2). The solid content concentration of the latex of the polymer particles (A-2) and the suspension of the polymer particles (A-1) is not particularly limited at the time of the above-mentioned mixing, and it is most simple in terms of the production using the polymer latex or polymer suspension as obtained through usual polymerization operation. In general, 25 to 45% by weight is preferable in the polymer latex obtained by emulsion polymerization method and 33 to 45% by weight is preferable in the polymer suspension obtained by suspension polymerization method. The temperature at the time of mixing is preferably 5°C or higher in consideration of the quantity of utility used in subsequent heat treatment operation.

Next, in the case of preparing the viscosity modifier (A') of the present invention, the mixture of the suspension of the polymer particles (A-1) and the latex of the polymer particles (A-2) is brought into contact with the aqueous electrolyte solution as described below. The above-mentioned contact with the aqueous electrolyte solution is preferably carried out by adding the aqueous electrolyte solution to the mixture of the polymer suspension and polymer latex while stirring the mixture. This operation makes it possible to coagulate fine polymer particles, such as by-product generated at the time of production of suspension polymerization method of the polymer particles (A-1), on the surfaces of the polymer particles (A-1) having a volume-average particle diameter of 50 to 500 $\mu$m, together with the polymer particles (A-2) having a volume-average particle diameter of 0.01 to 0.5 $\mu$m, to cover the surfaces of the polymer particles (A-1). Accordingly, the polymer fine particles (fine powder) generated in the suspension polymerization method or the like can be removed, so that the matter concerning the deterioration of solid-liquid separation property at the time of dehydrating, and the outflow of polymer fine particles (fine powder) into dehydrating wastewater, can be improved.

The aqueous electrolyte solution is not particularly limited and for example, it may be an aqueous solution of an organic acid (or its salt) or an inorganic acid (or its salt) having a characteristic of coagulating or solidification polymer latex. Specifically, one or a mixture of two or more of aqueous solution of inorganic salts such as sodium chloride, potassium chloride, lithium chloride, sodium bromide, potassium bromide, lithium bromide, potassium iodide, sodium iodide, potassium sulfate, sodium sulfate, ammonium sulfate, ammonium chloride, sodium nitrate, potassium nitrate, calcium chloride, ferrous sulfate, magnesium sulfate, zinc sulfate, copper sulfate, barium chloride, ferrous chloride, ferric chloride, magnesium chloride, ferric sulfate, aluminum sulfate, potassium alum, and iron alum; aqueous solutions of inorganic acids such as hydrochloric acid, sulfuric acid, nitric acid, and phosphoric acid; organic acids such as acetic acid and formic acid and their aqueous solutions; and aqueous solutions of organic acid salts such as sodium acetate, calcium acetate, sodium formate, calcium formate, and the like may be employed. Particularly examples of the aqueous electrolyte solution include aqueous solutions of sodium chloride, potassium chloride, sodium sulfate, ammonium chloride, calcium chloride, magnesium chloride, magnesium sulfate, barium chloride, ferrous chloride, aluminum sulfate, potassium alum, iron alum, hydrochloric acid, sulfuric acid, nitric acid, and acetic acid.

The concentration of the above-mentioned aqueous electrolyte solution is 0.001% by weight or more, preferably 0.1% by weight or more, and more preferably 1% by weight or more. In the case that the concentration of the aqueous electrolyte solution is less than 0.001% by weight, it is needed to add a large quantity of the aqueous electrolyte solution to coagulate the polymer particles and, which causes increased quantity of utility used in subsequent heat treatment operation and therefore, it is not preferable.

Addition of the aqueous electrolyte solution to the mixture of the above-mentioned suspension of the polymer particles (A-1) and latex of the polymer particles (A-2) is preferably carried out at a temperature not higher than the Vicat softening temperature of the polymer particles (A-2). In the case the temperature of the mixture at the time of adding the aqueous electrolyte solution exceeds the Vicat softening temperature of the polymer particles (A-2), there sometimes occur problems, for example, that the resulting distorted shape of the viscosity modifier (A') prepared causes increased water content in the dehydrated modifier : the resulting residue of un-coagulated polymer particles (A-2) deseriorate the solid-liquid separation property and agglutination of the viscosity modifier (A') frequently occurs and therefore, it is not preferable.

At the time of adding the aqueous electrolyte solution to the mixture of the above-mentioned suspension of the polymer particles (A-1) and latex of the polymer particles (A-2), it is preferable to carry out the addition after adjusting the solid content concentration of the mixture to be 20 to 50% by weight. In the case the above-mentioned solid content concentration is lower than 20% by weight, polymer fine particles sometimes remain in the system even after adding the aqueous electrolyte solution and on the other hand, if the above-mentioned solid content concentration exceeds 50% by weight, secondary coagulated particles via the polymer particles (A-2) are generated in some cases and the water content after dehydrating tends to be high, and therefore it is not preferable.

The weight ratio of the solid content of the polymer particles (A-1) and the polymer particles (A-2) in the viscosity modifier (A') of the present invention is 0.5 to 30 parts by weight of the polymer particles (A-2), more preferably 1 to 20 parts by weight, furthermore preferably 2 to 15 parts by weight, and even more preferably 3 to 10 parts by weight relative to 100 parts by weight of the polymer particles (A-1). If the amount of the polymer particles (A-2) is less than 0.5 parts by weight relative to 100 parts by weight of the polymer particles (A-1), polymer fine particles sometimes remain in the system even after adding the aqueous electrolyte solution and therefore, the solid-liquid separation property tends to be worsened and at the time of drying the obtained viscosity modifier (A'), deposition to the inner wall surface of a drying apparatus tends to be increased. On the other hand, if the amount of the polymer particles (A-2) exceeds 30 parts by weight relative to 100 parts by weight of the polymer particles (A-1), the secondary coagulated particles via the polymer particles (A-2) tend to be generated easily and also the remaining emulsifier amount tends to be increased, and accordingly, hydrolysis of thermoplastic polyester resins is easily promoted and the viscosity-increasing effect tends to be lowered.

At the time of preparing the viscosity modifier (A') of the present invention, in the case that the ratio of the latex of the polymer particles (A-2) is high in the mixture of the suspension of polymer particles (A-1) and the latex of polymer particles (A-2), that the addition speed of the aqueous electrolyte solution is extremely high; or that the concentration of the aqueous electrolyte solution is extremely high, significant viscosity increase is sometimes observed when the aqueous electrolyte solution is added. In such a case, operation of lowering the viscosity of the system to the extent that the normal stirring state can be maintained may be conducted by, for example, arbitrarily adding water to the system.
The amount of the aqueous electrolyte solution differs depending on the ratio of the polymer particles (A-2) in the mixture of the suspension of polymer particles (A-1) and the latex of polymer particles (A-2), and the aqueous electrolyte solution is preferably added at least in an amount of which the coagulated polymer particles (A-2) do not remain after heat treatment.

For example, in the case the above-mentioned aqueous electrolyte solution is an aqueous acidic solution and the suspension after granulation has acidic property, after neutralization with alkali such as sodium hydroxide, or in the case the above-mentioned aqueous electrolyte solution is an aqueous neutral solution, as it is, heat treatment at 50 to 120°C is preferably carried out. Accordingly, the coagulated polymer particles (A-2) covering the surfaces of the polymer particles (A-1) are densified to lower the water content of the obtained viscosity modifier (A').

Thereafter, dehydrating and drying may be carried out by a normal method to obtain the viscosity modifier (A') of the present invention.

The compounding ratio of the viscosity modifier (A) or (A') with the thermoplastic polyester resin (B) in the thermoplastic polyester resin composition of the present invention can be widely selected as needed, and it is preferably 0.1 to 50 parts by weight of the viscosity modifier (A) or (A'), more preferably 0.1 to 20 parts by weight of the viscosity modifier (A) or (A'), furthermore preferably 0.5 to 10 parts by weight, and even more preferably 0.5 to 7 parts by weight, based on 100 parts by weight of the thermoplastic polyester resin (B). If the compounding ratio of the viscosity modifier (A) or (A') is less than 0.1 parts by weight, the melt viscosity is not be increased sufficiently and stable processability may not be obtained in some cases. On the other hand, if the compounding ratio of the viscosity modifier (A) or (A') exceeds 50 parts by weight, the gloss and transparency of obtained molded articles may be lost in some cases.

The thermoplastic polyester resin (B) is not particularly limited and may be preferably thermoplastic polyester resins containing polyalkylene terephthalate, polyalkylene naphthalene dicarboxylate, or a unit derived from at least one of an aliphatic diol, an alicyclic diol or a combination thereof and at least one of a dibasic acid. The thermoplastic polyester resin (B) may be employed as one kind or combinations of two or more kinds of thermoplastic polyester resins.

Examples of the above-mentioned polyalkylene terephthalate may include polybutylene terephthalate, polyethylene terephthalate, and polypentylene terephthalate, or aromatic co-polyesters containing units derived from two types of glycols (e.g. ethylene glycol and cyclohexane dimethanol) or two types of dibasic acids (e.g. terephthalic acid and isophthalic acid). Among them, polyethylene terephthalate or co-polyesters containing a unit derived from ethylene glycol or cyclohexane dimethanol in combination with isophthalic acid is preferable.

As examples of the polyalkylene naphthalene dicarboxylate, polynaphthalene dicarboxylate and the like may be exemplified.

A process for preparing the thermoplastic polyester resin composition of the present invention is not particularly limited and a known method can be employed. For example, such a method as, mixing in advance the thermoplastic polyester resin and the viscosity modifier for thermoplastic polyester resin using a Henschel mixer or a tumbler, and thereafter melting and kneading the mixture to obtain the resin composition, using a single-screw extruder, a twin-screw extruder, a banbury mixer, or heating roll, can be employed.

Further, for example, a high concentration master batch previously prepared, by mixing the viscosity modifier for thermoplastic polyester resin in an amount of 50 parts by weight or more with 100 parts by weight of a thermoplastic polyester resin, may be preferably used at the time of actual molding process by mixing and diluting the masterbatch with a thermoplastic polyester resin to give a desired addition amount of the viscosity modifier in a range of 0.1 to 50 parts by weight.

To the thermoplastic polyester resin composition of the present invention, one or combinations of two or more of other additives such as spreading agents, lubricants, impact modifiers, plasticizers, colorants, fillers, and foaming agents may be added, if necessary.

A process for obtaining a molded article from the thermoplastic polyester resin composition of the present invention is not particularly limited and commonly used molding methods may be preferably employed, such as an extrusion molding method, a calendering method, a blow molding and an injection molding method. According to the present invention, it is made possible to actualize stable processability even in an extrusion molding method and blow molding method for which higher melt viscosity is required in melt processing, and provide a molded article with favorable transparency and gloss.

EXAMPLES

Hereinafter, the present invention will be described in detail with reference to Examples and Comparative Examples, however, the present invention is not intended to be limited to the illustrated Examples- In addition, hereinafter, "part(s)" means "part(s) by weight". Styrene is abbreviated as ST; methyl acrylate as MA; butyl acrylate as BA; methyl methacrylate as MMA; allyl methacrylate as ALMA; potassium persulfate as KPS; lauroyl peroxide as LPO; and 2-ethylhexyl thioglycolate as 2EHTG.

Evaluation methods employed in following Examples and Evaluation methods employed in following Examples and Comparative Examples are collectively described below.

(Measurement of polymerization conversion ratio)

The polymerization conversion ratio was calculated by the following equation.

$$\text{Polymerization conversion ratio (\%)} =$$
$$(\text{Amount of produced polymers} / \text{amount of charged monomers}) \times$$
$$100$$

(Measurement of weight-average molecular weight)

The weight-average molecular weight of the polymer particles was measured by dissolving a sample in tetrahydrofuran (THF) and measuring the soluble matter thereof by gel permeation chromatography (manufactured by WATERS, 510 model pump 410RI486 UV) using polystyrenes as standards (sample solution-20 mg sample/10 mL THF, measurement temperature= 25°C, detector: differential reflection type one, injection amount: 1 mL).

(Measurement of volume-average particle diameter of polymer particles)

The volume-average particle diameter of polymer particles of 50 to 500 $\mu$m size was measured by using a particle size analyzer Micro Track FRA manufactured by Nikkiso Co., Ltd.

(Measurement of volume-average particle diameter of polymer particles)

The volume-average particle diameter of polymer particles of 0.01 to 0.5 $\mu$m size was measured by light scattering of light with wavelength of 546 nm by using U-2000 Spectrophotometer manufactured by Hitachi Ltd.

(Measurement of glass transition temperature)

The glass transition temperature of the polymer particles was measured by differential scanning calorimetry (temperature increase rate of 10°C/min) after a sample was heated to 100°C and melt-quenched.

(Measurement of refraction index)

The refractive index of a polymer sample was a value at 20°C and measured by using Abbe refractometer 2T manufactured by Atago Co., Ltd.

(Measurement of Vicat softening temperature)

The Vicat softening temperature of polymer particles was measured according to JIS K-7206, A50 method (test load 10 N, temperature increase rate of 50°C/h).

(Pellet preparation conditions)

A mixture of 100 parts of polyethylene terephthalate (NOVAPEX GM-330, manufactured by Mitsubishi Chemical Corporation, intrinsic viscosity value; 0.65) dried at 140°C for 5 hours and 5 parts of a viscosity modifier sample was melt kneaded using a 44 mm twin-screw extruder (TEX 44) manufactured by Japan Steel Works, Ltd. under the following conditions (molding temperature, screw rotation speed, discharge amount, and die diameter) to prepare pellets.
Cylinder temperature: C1 = 230°C, C2 = 240°C, C3 = 240°C, C4 = 250°C, C5 = 260°C, C6 = 260°C, and die = 270°C.
Screw rotation speed: 100 rpm
Discharge amount: 20 kg/h
Die diameter: 3 mm$\Phi$

(Extrusion molding conditions)

The pellets produced by the above-mentioned method were extrusion-molded by using a 20 mm single-screw extruder manufactured by Brabender under the following conditions (molding temperature, screw rotation speed, discharge amount, and die diameter) to prepare an extruded molded article.
Cylinder temperature: C1 = 250°C, C2 = 270°C, C3 = 270°C, die = 250°C,
Screw rotation speed: 50 rpm
Discharge amount: 3 kg/h
Die diameter: width 50 mm $\times$ thickness 3 mm

(Evaluation of Anti-draw down effect)

While drawing out melted resin discharged from the die outlet of the single-screw extruder, at the time when the melted resin starts drawing down unbearably because of its self-weight, the length of the strand of the melted resin, namely the drawing out length, was measured and employed as an index of easiness of drawing out in the extrusion molding. In this connection, as the numeral value is higher, it means the anti-draw down effect is good (that is, the melt viscosity improvement effect is good).

(Evaluation of thermal fusion property of powder)

When 0.5 g of a viscosity modifier sample powder was spread thinly on the bottom of an aluminum container with a diameter of 3 cm and heated in an oven for 1 hour, the temperature at which the powder was melted and stuck to the metal wall surface was measured and compared.

(Evaluation of gloss of molding surface)

The gloss of molded article surface was measured for the surface of a flat plate-like molded article obtained by the above-mentioned extrusion molding by a gloss meter (Micro gloss 60° manufactured by Guardner Co., Ltd.).

(Evaluation of transparency)

The total light transmittance and haze value were measured according to ASTM-D-1003, by using a flat plate like molded article of 7.5 cm×5 cm×2 cm obtained by the above mentioned extrusion molding and a gloss meter (Σ80-VG-1D,manufactured by Nippon Denshoku Industries Co., Ltd.). As the numeral value of the total light transmittance is higher or the numeral value of the haze value is smaller, it means that transparency is good.

(Synthesis Example 1) Preparationof viscosity modifier (A), one-step polymer

An 8 L-capacity reaction vessel equipped with a stirrer and a cooler was charged with 200 parts of distilled water and 0-5 parts of sodium dioctyl sulfosuccinate. Subsequently, after the inside of the vessel was replaced with nitrogen, the reaction vessel was heated to 70°C while stirring, thereafter, 0,2 parts of KPS was added and the contents were stirred for 15 minutes, a mixture of 85 parts of ST, 13 parts of MA, 2 parts of MMA, and 0.1 parts of 2EHTG was added continuously over 4.5 hours and on completion of the addition, the reaction mixture was further stirred for 1 hour and thereafter cooled to obtain latex. The polymerization conversion ratio was 99.8%. The obtained latex was salted out and coagulated by an aqueous calcium chloride solution and heated to 90°C and then filtered by using a centrifugal dehydrator. The dehydrated cake of the obtained copolymer was washed with water and dried at 50°C for 15 hours by a parallel flow dryer to obtain a viscosity modifier sample (1), which was a white powdery sample of one-step polymer. The weight average molecular weight of the obtained one-step polymer was 202,000 and the refraction index was 1.57.

(Synthesis Example 2) Preparation of viscosity modifier (A), two-step polymer

An 8 L-capacity reaction vessel equipped with a stirrer and a cooler was charged with 200 parts of distilled water and 0.5 parts of sodium dioctyl sulfosuccinate. Subsequently, after the inside of the vessel was replaced with nitrogen, the reaction vessel was heated to 70°C while stirring. Thereafter, 0.2 parts of KPS was added and the contents were stirred for 15 minutes, a mixture of 78 parts of ST, 12 parts of MA, and 0.1 parts of 2EHTG was continuously added over 4 hours. After one hour from completion of the addition, 7 parts of BA and 3 parts of MMA were continuously added for 1 hour and on completion of the addition, the reaction mixture was further stirred for 1 hour and thereafter cooled to obtain latex. The polymerization conversion ratio was 99.9%. The obtained latex was salted out, coagulated by an aqueous calcium chloride solution, heated to 90°C, and then filtered by using a centrifugal dehydrator. The dehydrated cake of the obtained copolymer was washed with water and dried at 50°C for 15 hours by a parallel flow dryer to obtain a viscosity modifier sample (3), which was a white powdery sample of two-step polymer. The weight average molecular weight of the obtained polymer sample was 210,000 and the refraction index was 1.56.

(Examples 1 to 3 and Comparative Example 1 to 3)

Viscosity modifier samples (2) and (4) to (6), which were one step polymers, were obtained by the same method as Synthesis Example 1, except that the addition amount of KPS, a polymerization initiator, was adjusted to be 0.2 parts and the addition amount of 2EHTG, a chain transfer agent, was adjusted to be 0.1 parts to control the weight average molecular weight to be about 200,000 and the composition ratio of monomers were changed as shown in Table 1.
The viscosity modifier samples (1) to (5) obtained in the above-mentioned method and Synthesis Examples 1 and 2 in amount of 5 parts were mixed with 100 parts of polyethylene terephthalate, and the extrusion mold processability, gloss and transparency of molded articles were evaluated. Results are shown in Table 1.
Table 1

| Example No. | Ex. | Ex.2 | Ex. 3 | Com. Ex. 1 | Com. Ex.2 | Com. Ex.3 |
|---|---|---|---|---|---|---|
| Viscosity modifier sample No. | (1) | (2) | (3) | (4) | (5) | (6) |
| Polymerization composition (part(s)) | | | | | | |
| Monomer mixture of first step | | | | | | |
| ST | 85 | 89 | 78 | 60 | 83 | 100 |
| MA | 13 | - | 12 | 40 | - | - |
| BA | - | 11 | - | - | - | - |
| MMA | 2 | - | - | - | 17 | - |
| Monomer mixture of second step | | | | | | |
| BA | - | - | 7 | - | - | - |
| MMA | - | - | 3 | - | - | - |
| Chain transfer agent | | | | | | |
| 2EHTG | 0.1 | 0.1 | 0.1 | 0.1 | 0.1 | 0.1 |
| Polymerization results | | | | | | |
| Polymerization conversion ratio (%) | 99.8 | 99.8 | 99.9 | 99.9 | 99.8 | 99.6 |
| Weight-average molecular weight of polymer | 202,000 | 205,000 | 210,000 | 205,000 | 206,000 | 208,000 |
| Refraction index of polymer | 1.57 | 1.58 | 1.56 | 1.54 | 1-57 | 1.59 |
| Evaluation results | | 18 | | | | |
| Anti-draw down effect (cm) | 22 | 96.0 | 21 | 19 | 10 | 19 |
| Surface gloss of molded article (%) | 96.7 | | 96.7 | 95.5 | 96.7 | 95.8 |
| Total light transmittance (%) | 92.3 | 89.1 | 92.2 | 66.8 | 92.1 | 73.4 |
| Haze value (%) | 1.3 | 2.7 | 1.2 | 38.6 | 1.5 | 23.8 |

According to the results shown in Table 1, in the case of Examples 1 to 3 having the composition ratios of monomers within the scope of the present invention as the viscosity modifier samples (1) to (3), it is understood that molded articles with good extrusion molding processability (anti-draw down effect), and gloss and transparency of molded articles are obtained. On the other hand, in the case of Comparative Examples 1 to 3 having the composition ratios of monomers out of the scope of the present invention as the viscosity modifier samples (4) to (6), the extrusion mold processability, and transparency are worsened.

(Examples 4 to 8)

Viscosity modifier samples (7) to (11), which were one-step polymers, were obtained by the same method as Synthesis Example 1, except that the addition amount of KPS, a polymerization initiator, and the addition amount of 2EHTG, which is a chain transfer agent, were changed to control the weight-average molecular weights of the viscosity modifier samples to be obtained within a range of about 50,000 to 3,000,000. The above-mentioned extrusion mold processability, and gloss and transparency of molded articles were evaluated by using the obtained viscosity modifier samples. The results are shown in Table 2.
Table 2

| Example No. | Ex.4 | Ex. 5 | Ex. 6 | Ex. 7 | Ex.8 |
|---|---|---|---|---|---|
| Viscosity modifier sample No. | (7) | (8) | (9) | (10) | (11) |
| Polymerization composition (part(s)) | | | | | |
| Monomer mixture of first step | | | | | |
| ST | 85 | 85 | 85 | 85 | 85 |
| MA | 18 | 13 | 13 | 13 | is |
| BA | - | - | - | - | - |
| MMA | 2 | 2 | 2 | 2 | 2 |
| Polymerization initiator | | | | | |
| KPS | 0.2 | 0.2 | 0.1 | 0.06 | 0.05 |
| Chain transfer agent | | | | | |
| 2EHTG | 0.5 | - | - | - | - |
| Polymerization results | | | | | |
| Polymerization conversion ratio (%) | 99.7 | 99.7 | 99.8 | 99.7 | 99.7 |
| Weight-average molecular weight of polymer | 50,000 | 350,000 | 1,120,000 | 2,190,000 | 3,170,000 |
| Refraction index of polymer | 1.57 | 1.57 | 1.57 | 1-57 | 1.57 |
| Evaluation results | | | | | |
| Anti-draw down effect (cm) | 23 | 22 | 18 | 18 | 16 |
| Surface gloss of molded article (%) | 96.2 | 96.7 | 96.7 | 96.8 | 96.8 |
| Total light transmittance (%) | 92.4 | 92.2 | 91.3 | 91.1 | 90.8 |
| Haze value (%) | 1.4 | 1.5 | 1.6 | 1.7 | 1.6 |

According to the results shown in Table 2, it is understood that in the case of Examples 4 to 8 in which the weight-average molecular weights of the viscosity modifier samples (7) to (11) were changed, the composition having good extrusion molding processability (anti-draw down effect), and gloss and transparency of molded articles are obtained. Further, it is also understood that as the value of the weight-average molecular weight is lower, the extrusion processability tends to be good.

(Examples 9 to 12, Comparative Example 4 and 5, and Reference Example 1)

Viscosity modifier sample (1) obtained by Synthesis Example 1 was compounded with thermoplastic polyester resin at the mixing ratios shown in Table 3, the above-mentioned extrusion molding processability, and gloss and transparency of molded articles were evaluated, and the results are shown in Table 3.
Table 3

| Example No. | Ex. 9 | Ex. 10 | Ex. 1 | Ex.11 | Ex. 12 | Com, Ex. 4 | Com. Ex. 5 | Ref. Ex. 1 |
|---|---|---|---|---|---|---|---|---|
| Viscosity modifier sample No. | (1) | (1) | (1) | (1) | (1) | (1) | (1) | - |
| Amount of Viscosity modifier sample (part(s)) | 0.5 | 3 | 6 | 10 | 15 | 0.05 | 60 | 0 |
| Evaluation results | | | | | | | | |
| Anti-draw down effect (cm) | 14 | 19 | 22 | 24 | 25 | 8 | 24 | 7 |
| Surface gloss of molded article (%) | 97.7 | 97 | 96.7 | 96.1 | 95.9 | - | 78.1 | - |

(continued)

| Example No. | Ex. 9 | Ex. 10 | Ex. 1 | Ex.11 | Ex. 12 | Com, Ex. 4 | Com. Ex. 5 | Ref. Ex. 1 |
|---|---|---|---|---|---|---|---|---|
| Viscosity modifier sample No. | (1) | (1) | (1) | (1) | (1) | (1) | (1) | - |
| Total light transmittance (%) | 92.8 | 92.4 | 92.3 | 91.8 | 91.7 | - | 78.4 | - |
| Haze value (%) | 1.1 | 1.2 | 1.3 | 1.4 | 1.6 | - | 22.7 | - |

According to the results shown in Table 3, in the case of Examples 9 to 12 having the blending ratios of the viscosity modifier sample within the scope of the compositions of the present invention, it is understood that compositions with good extrusion molding processability, and gloss and transparency of molded articles are obtained. On the other hand, in the case of Comparative Example 4 in which the compounding ratio of the viscosity modifier sample was less than the range defined as the composition of the present invention, it is understood that no sufficient extrusion molding processability is obtained. Further, in the case of Comparative Example 5 in which the compounding ratio of the viscosity modifier sample was higher than the range defined as the composition of the present invention, it is understood that gloss and transparency of molded articles are worsened. As Reference Example 1, the evaluation was carried out for the case the viscosity modifier sample was not at all compounded.

Next, Synthesis Example 3 of a suspension of polymer particles (A-1) for preparing a viscosity modifier (A') of the present invention, Synthesis Examples 4, 5, and 6 of latex of polymer particles (A-2) to be used for covering the surface of the polymer particles (A-1), Synthesis Example 7 of the viscosity modifier (A') obtained by covering the surface of the polymer particles (A-1) with the polymer particles (A-2), and Synthesis Example 8 of a viscosity modifier for thermoplastic polyester resins by an emulsion polymerization method will be described below.

(Synthesis Example 3) Preparation of suspension of polymer particles (A-1)

A reactor equipped with a stirrer and a cooler was charged with 200 parts of distilled water and 0.6 parts of tricalcium phosphate. Subsequently, after the inside of the reactor was replaced with nitrogen, the reactor was heated to 40°C while stirring. Thereafter, 1.0 part of LPO was added and the contents were stirred for 15 minutes, a monomer mixture of 85 parts of ST, 13 parts of MA, and 2 parts of MMA was added and further 0.3 parts of polyvinyl alcohol was added, the rotation speed of the stirrer was adjusted to control the dispersion particle diameter of the monomers to be about 200 $\mu$m. Thereafter, the reactor was heated to 80°C, polymerization was carried out for 4 hours, and further stirring was carried out for 2 hours to complete polymerization and obtain a suspension of suspension-polymerized polymer with 35% by weight of solid content. The polymerization conversion ratio was 99.8%. The volume average particle diameter was 190 $\mu$m. The glass transition temperature of the suspension-polymerized polymer particles was 75°C; refraction index 1.57, and weight-average molecular weight 210,000.

(Synthesis Example 4) Preparation of latex of polymer particles (A-2)

A reactor equipped with a stirrer and a cooler was charged with 220 parts of distilled water, 0.3 parts of boric acid, 0.03 parts of sodium carbonate, 0-09 parts of sodium N-lauroyl sarcosinate, 0.09 parts of sodium formaldehydesulfoxylate, 0.006 parts of ethylenediamine tetraacetic acid sodium salt, and 0.002 parts of ferrous sulfate heptahydrate, and after the reactor was replaced with nitrogen, the reactor was heated to 80°C. To the reactor, 25% by weight of a monomer mixture of 25 parts of MMA, 0.1 parts of ALMA, and 0.1 parts of t-butyl hydroperoxide was collectively charged and polymerization was carried out for 45 minutes. Successively, the remaining 75% by weight of the mixture solution was continuously added over 1 hour. On completion of the additional addition, the mixture has kept at the same temperature for 2 hours to complete polymerization. During that time, 0.2 parts of sodium N-lauroyl sarcosinate was added. The volume-average particle diameter of the polymer particles in the obtained innermost layer-crosslinked methacrylic polymer latex was. 0.16 $\mu$m and the polymerization conversion ratio was 98.0%. Successively, the obtained crosslinked methacrylic polymer latex was kept at 80°C in nitrogen current and after 0.1 parts of potassium persulfate was added, a monomer mixture of 41 parts of BA, 9 parts of ST, and 1 part of ALMA was continuously added over 5 hours. During that time, 0.1 parts of potassium oleate was added separately three times. On completion of the addition of the monomer mixture, to complete the polymerization reaction, 0.05 parts of potassium persulfate was added and the reaction mixture was kept for 2 hours. The volume-average particle diameter of the obtained rubber-like polymer was 0.23 $\mu$m and the polymerization conversion ratio was 99.0%. Successively, the obtained rubber-like polymer latex was kept at 80°C in nitrogen current and after 0.02 parts of potassium persulfate was added, a monomer mixture of 24 parts of MMA, 1 part of BA, and 0.1 parts of t-dodecyl mercaptan was continuously added over 1 hour. After one hour from the completion of the addition of the monomer mixture, an emulsion-polymerized graft copolymer latex (X) having a volume-average particle diameter of 0.25 μm and a multi-layer structure was obtained. The Vicat softening temperature of the emulsion-polymerized graft copolymer latex (X) was 88°C.

(Synthesis Example 5) Preparation of latex of polymer particles (A-2)

A reactor equipped with a stirrer and a cooler was charged with 200 parts of distilled water, 1 part of sodium dioctyl sulfosuccinate, and 0.03 parts of potassium persulfate and after the inside of the reactor was replaced with nitrogen, the reactor was heated to 65°C. After a monomer mixture of 84 parts of MMA and 16 parts of BA was added for 4 hours to the reactor, heating and stirring were continued for 1 hour to complete the polymerization reaction. Thereafter, a monomer mixture of 11 parts of BA and 9 parts of MMA was added for 1 hour and polymerization was carried out further for 1.5 hours at 65°C to obtain an emulsion-polymerized polymer latex (Y) having a volume-average particle diameter of 0.08 μm and Vicat softening temperature of 93°C.

(Synthesis Example 6) Preparation of latex of polymer particles_ (A-2)

A reactor equipped with a stirrer and a cooler was charged with 200 parts of distilled water, 1-5 parts of sodium oleate, 0.002 parts of ferrous sulfate, 0.005 parts of ethylenediamine tetraacetic acid sodium salt, 0.2 parts of sodium formaldehyde sulfoxylate, 0.2 parts of tricalcium phosphate, 76 parts of butadiene, 24 parts of styrene, 1.0 parts of divinylbenzene, and 0.1 parts of diisopropylbenzene hydroperoxide, and polymerization was carried out at 50°C for 15 hours to obtain rubber latex (a) with a volume-average particle diameter of 0.07 μm and polymerization conversion ratio of 99%. Successively, 180 parts of the above-mentioned rubber latex (a) (60 parts of solid content), 200 parts of distilled water, 0.002 parts of ferrous sulfate, 0.004 parts of ethylenediamine, tetraacetic acid sodium salt, and 0.1 parts of sodium formaldehyde sulfoxylate were mixed and a mixed solution of 30 parts of styrene, 3 parts of hydroxyethyl methacrylate, and 0.2 parts of cumene hydroperoxide was continuously added at 60°C to form an inner layer shell. On completion of the inner layer shell polymerization, a mixed solution of 5 parts of styrene, 2 parts of methyl methacrylate, and 0.2 parts of cumene hydroperoxide was continuously mixed at 60°C to form an outer layer shell and obtain an emulsion-polymerized graft copolymer latex (Z) having a volume average particle diameter of 0.16 μm and Vicat softening temperature of 81°C.

(Synthesis Example 7) Viscosity modifier (A'): Preparation of viscosity modifier sample, covered polymer

After 300 parts of the polymer suspension (100 parts of solid content) obtained in Synthesis Example 3 was adjusted at 80°C, 16 parts of the emulsion-polymerized graft copolymer latex (X) (5 parts of solid content) obtained in Synthesis Example 4 and 2 parts of an aqueous 15 wt% sodium sulfate solution were dropwise added in this order. Thereafter, the temperature was increased to 95°C under stirring condition to carry out heat treatment.
The reaction product was filtered by a centrifugal dehydrator, and the obtained polymer particles were washed with water and dried at 50°C for 1 hour by a fluidizing drier to obtain a viscosity modifier sample (12), which was a white powdery sample.

(Synthesis Example 8) Preparation of viscosity modifier by emulsion-polymerization

A reaction vessel equipped with a stirrer and a cooler was charged with 200 parts of distilled water and 0.5 parts of sodium dioctyl sulfosuccinate. Subsequently, after the inside of the reaction vessel was replaced with nitrogen, the reaction vessel was heated to 70°C while stirring. Thereafter, 0.2 parts of potassium persulfate was added and the contents were stirred for 15 minutes, a mixture of 60 parts of ST, 40 parts of and 0.5 parts of 2EHTG was continuously added over 4 hours. On completion of the addition, the reaction mixture was further stirred for 1 hour and thereafter cooled to obtain emulsion-polymerized latex. The polymerization conversion ratio was 99.7%. The obtained emulsion-polymerized latex was salted out and coagulated by an aqueous calcium chloride solution, heated to 90°C for heat treatment, and then filtered by using a centrifugal dehydrator. The dehydrated cake of the obtained emulsified polymer was washed with water and dried at 50°C for 15 hours by a parallel flow dryer to obtain a viscosity modifier sample (25), which was an emulsion polymerized polymer with a weight-average molecular weight of 50,000 and a volume-average particle diameter of 0.08 μm.

(Example 13)

The viscosity modifier sample (12) obtained in Synthesis Example 7 in an amount of 5 parts was mixed with 100 parts of polyethylene terephthalate and according to the above-mentioned methods, the anti-draw down effect, and gloss and transparency of molded articles were evaluated. Results are shown in Table 4.

(Examples 14 and 15 and Comparative Example 6 to 8)

As a viscosity modifier (A'), viscosity modifier samples (13) to (17) were obtained by the same method as Synthesis Example 7, except that the addition amount of LPO, which is a polymerization initiator, was adjusted to be 1.0 part to control the weight-average molecular weight of the polymer particles (A-1) to be about 200,000 and the composition ratios of monomers were changed as shown in Table 4 to prepare the polymer particles (A-1). The obtained viscosity modifier samples in amount of parts were compounded with 100 parts of polyethylene terephthalate, and the anti-draw down effect, and gloss and transparency of molded articles were evaluated in the same manner as Example 13. Results are shown in Table 4.

Table 4

| Example No. | Ex. 13 | Ex. 14 | Ex. 15 | Com. Ex. 6 | Com. Ex. 7 | Com. Ex. 8 |
|---|---|---|---|---|---|---|
| Viscosity modifier sample No. | (12) | (13) | (14) | (15) | (16) | (17) |
| Composition (parts) Composition of polymer particles (A-1) | | | | | | |
| ST | 85 | 89 | 78 | 60 | 83 | 100 |
| MA | 13 | - | 19 | 40 | - | - |
| BA | - | 11 | - | - | - | - |
| MMA | 2 | - | 3 | - | 17 | - |
| Polymerization initiator | | | | | | |
| LPO | 1.0 | 1.0 | 1.0 | 1.0 | 1.0 | 1.0 |
| Evaluation results | | | | | | |
| Polymerization conversion ratio (%) | 99.8 | 99.7 | 99.8 | 99.9 | 99.8 | 99.5 |
| Weight-average molecular weight of polymer particles (A-1) | 210,000 | 205,000 | 208,000 | 211,000 | 208,000 | 212,000 |
| Volume average particle diameter of polymer particles (A-1) ($\mu$m) | 190 | 195 | 195 | 195 | 195 | 200 |
| Refraction index of polymer particles (A-1) | 1.57 | 1.58 | 1.56 | 1.54 | 1.57 | 1.59 |
| Anti-draw down effect (cm) | 24 | 21 | 22 | 19 | 10 | 19 |
| Surface gloss of molded article (%) | 96.8 | 95.9 | 96.7 | 95.6 | 96.8 | 95.4 |
| Total light transmittance (%) | 92.2 | 89.6 | 92.3 | 67.2 | 92.3 | 73.5 |
| Haze value (%) | 1.2 | 2.7 | 1.3 | 35.3 | 1.4 | 22-9 |

According to the results shown in Table 4, in the case of Examples 13 to 15 having the monomer composition ratios of polymer particles (A-1) within the scope of the present invention, it can be understood that compositions having favorable anti-draw down effect and transparency of molded articles are obtained. On the other hand, in the case of Comparative Examples 6 to 8 having the monomer composition ratios of polymer particles (A-1) out of the scope of the present invention, the balance of the anti-draw down effect, and gloss and transparency of molded articles was inferior.

(Examples 16 to 20)

Viscosity modifier samples (18) to (22) were obtained by the same method as Synthesis Example 7, except that the addition amount of LPO, which is a polymerization initiator, and the addition amount of 2EHTG, which is a chain transfer agent, for polymer particles (A-1) were changed as shown in Table 5 to control the weight average molecular weights of the polymer particles (A-1) to be about 50,000 to 3,000,000 and prepare the polymer particles (A-1) for the viscosity modifier (A'). The obtained viscosity modifier samples in amount of 5 parts were mixed with 100 parts of polyethylene terephthalate and the anti-draw down effect, and gloss and transparency of molded articles were evaluated in the same manner as Example 13. Results are shown in Table 5.

Table 5

| Example No. | Ex. 16 | Ex. 13 | Ex. 17 | Ex. 18 | Ex. 19 | Ex. 20 |
|---|---|---|---|---|---|---|
| Viscosity modifier sample No. | (18) | (12) | (19) | (20) | (21) | (22) |
| Composition (parts) | | | | | | |
|   Composition of polymer particle (A-1) | | | | | | |
|   ST | 85 | 85 | 85 | 85 | 85 | 85 |
|   MA | 13 | 13 | 18 | 13 | 13 | 13 |
|   MMA | 2 | 2 | 2 | 2 | 2 | 2 |
|   Polymerization initiator | | | | | | |
|   LPO | 1.0 | 1.0 | 0.7 | 0:5 | 0.3 | 0.2 |
|   Chain transfer agent | | | | | | |
|   2EHTG | 0.7 | 0 | 0 | 0 | 0 | 0 |
| Evaluation results | | | | | | |
|   Polymerization conversion ratio (%) | 99.8 | 99.8 | 99.9 | 99.8 | 99.9 | 99.7 |
|   Weight-average molecular weight of polymer particles (A-1) | 52,000 | 210,000 | 352,000 | 1,040,000 | 2,020,000 | 3,040,000 |
|   Volume-average particle diameter of polymer particles (A-1) ($\mu$m) | 200 | 190 | 195 | 200 | 205 | 195 |
|   Glass transition temperature of polymer particles (A-1) (°C) | 75 | 75 | 76 | 78 | 78 | 78 |
|   Refraction index of polymer particles (A-1) | 1.57 | 1.57 | 1.57 | 1.57 | 1.57 | 1-57 |
|   Anti-draw down effect (cm) | 25 | 24 | 24 | 20 | 20 | 18 |
|   Surface gloss of molded article (%) | 96.4 | 96.8 | 96.6 | 96.8 | 96.8 | 96.8 |
|   Total light transmittance (%) | 92.3 | 92.2 | 92.3 | 92.4 | 91.8 | 91.2 |
|   Haze value (%) | 1.4 | 1.2 | 1.4 | 1.6 | 1.6 | 1.5 |

According to the results shown in Table 5, in the case of Examples 13 and 16 to 20, it can be understood that compositions having favorable anti-draw down effect, and gloss and transparency of molded articles are obtained. Further, it is found that as the weight-average molecular weight is smaller, the mold processability tends to become better.

(Example 21 and Comparative Example 9)

Viscosity modifier samples (23) and (24) were obtained by the same method as Synthesis Example 7, except that the glass transition temperature of the polymer particles (A-1) was changed as shown in Table 6. Using the obtained viscosity modifiers, the anti-draw down effect was evaluated in the same manner as Example 16 and also thermal fusion property was evaluated according to the evaluation method described above. Results are shown in Table 6.

Table 6

| Example No. | Ex. 16 | Ex. 21 | Com. Ex. 9 |
|---|---|---|---|
| Viscosity modifier sample No. | (18) | (23) | (24) |
| Composition (parts) | | | |
| Composition of polymer particles (A-1) | | | |
| ST | 85 | 75 | 65 |
| MA | 13 | 23 | 33 |
| MMA | 2 | 2 | 2 |
| Polymerization initiator | | | |
| LPO | 1.0 | 1.0 | 1.0 |
| Chain transfer agent | | | |
| 2EHTG | 0.7 | 0.7 | 0.7 |
| Evaluation results | | | |
| Polymerization conversion ratio (%) | 99.8 | 99.8 | 99.8 |
| Weight-average molecular weight of polymer particles (A-1) | 52,000 | 53,000 | 52,000 |
| Volume-average particle diameter of polymer particles (A-1) ($\mu$m) | 200 | 200 | 200 |
| Glass transition temperature of polymer particles (A-1) (°C) | 75 | 67 | 56 |
| Anti-draw down effect (cm) | 25 | 25 | 25 |
| Thermal fusion temperature (°C) | 110 | 110 | 85 |

According to the results shown in Table 6, in the case of Examples 16 and 21, it can be understood that if the glass transition temperature of the polymer particles (A-1) is within a scope of the present invention, favorable anti-draw down effect and thermal fusion property of the powders can be shown. On the other hand, in the case of Comparative Example 9 using the viscosity modifier sample (24) having a glass transition temperature of the polymer particles (A-1) below the scope of the present invention, it can be understood that although the anti-draw down effect is good, the powder's thermal fusion property is lowered.

(Example 22 to 24 and Comparative Example 10)

The anti-draw down effect and thermal fusion property were evaluated in the same methods as those of Example 16 for the case that a viscosity modifier sample was prepared by using the same, as the polymer particles (A-1), as that used in Synthesis Example 3 and the kind of the polymer particles (A-2) covering the surface of the polymer particles (A-1) was changed as shown in Table 7, and for the case that the viscosity modifier sample (25) prepared by the emulsion polymerization method as described in Synthesis Example 8 was used as the a viscosity modifier component.

Results are shown in Table 7.

Table 7

| Example. No. | Ex. 22 | Ex. 23 | Ex. 24 | Com. Ex. 6 | Com. Ex. 10 |
|---|---|---|---|---|---|
| Viscosity modifier sample No. | (18) | - | - | (15) | (25) |
| Glass transition temperature of polymer particles (A-1) (°C) | 75 | 75 | 75 | 74 | 74 |
| Kind of polymer particles (A-2) | (X) | (Y) | (Z) | (X) | - |
| Volume-average particle diameter of polymer particles (A-2) ($\mu$m) | 0.25 | 0.08 | 0.16 | 0.25 | 0.08 |
| Vicat softening temperature of polymer particles (A-2) (°C) | 88 | 93 | 81 | 88 | - |
| Covering amount of polymer particles (A-2) (parts) | 5 | 5 | 5 | 5 | - |
| Evaluation results | | | | | |
| Anti-draw down effect (cm) | 25 | 25 | 25 | 19 | 16 |

(continued)

| Evaluation results | | | | | |
|---|---|---|---|---|---|
| Thermal fusion temperature (°C) | 110 | 115 | 105 | 110 | 70 |

According to the results shown in Table 7, it can be understood that if the kind of the polymer particles (A-2) covering the polymer particles (A-1) is within a preferable scope of the present invention as in the case of Examples 22 to 24, favorable anti-draw down effect and thermal fusion property of the powders are shown. On the other hand, in the case of Comparative Example 10 using the viscosity modifier sample (25) containing the viscosity modifier component produced by the emulsion polymerization, the draw-down-resistance property is further lowered as compared with that of Synthesis Example 6 in which the suspension polymer particles with the same composition are contained and the thermal fusion is also lowered. It is considered that the further anti-draw down effect deterioration is due to hydrolysis of thermoplastic polyester resin. Further, it is also understood that in the case the surface is not covered, the thermal fusion property of the powder is lowered.

(Example 25 to 30 and Comparative Examples 11 to 13)

The anti-draw down effect and thermal fusion property were evaluated in the same methods as those of Example 16 for the case that polyethylene terephthalate was used as the thermoplastic polyester resin; a same viscosity modifier as the viscosity modifier (A') in Example 16 was used; and the amount of the polymer particles (A-2) for covering the surface of the polymer particles (A-1) was changed as shown in Table 8. Results are shown in Table 8.
Table 8

| Example. No. | Ex. 25 | Ex. 26 | Ex. 16 | Ex. 27 | Ex. 2B | Ex. 29 | Ex. 30 | Com. Ex. 11 | Com. Ex. 12 | Com. Ex. 13 |
|---|---|---|---|---|---|---|---|---|---|---|
| Viscosity modifier sample No. | (18) | (18) | (18) | (18) | (18) | (18) | (18) | (18) | (18) | (18) |
| Glass transition temperature of polymer particles (A-1) (°C) | 75 | 75 | 76 | 76 | 75 | 75 | 75 | 75 | 75 | 75 |
| Kind of polymer particles (A-2) | (X) | (X) | (X) | (X) | (X) | (X) | (X) | (X) | (X) | (X) |
| Covering amount of polymer particles (A-2) (part.(s)) | 0.5 | 3 | 5 | 8 | 13 | 18 | 25 | 0 | 0.3 | 35 |
| Evaluation results | | | | | | | | | | |
|     Anti-draw down effect (cm) | 24 | 26 | 25 | 24 | 22 | 21 | 18 | 24 | 25 | 12 |
|     Thermal fusion temperature (°C) | 76 | 80 | 90 | 110 | 110 | 110 | 110 | 70 | 70 | 110 |

According to the results shown an Table 8, it can be understood that if the amount of the polymer particles (A-2) covering the polymer particles (A-1) in the viscosity modifier (A') is within a scope of the present invention as in the case of Examples 25 to 30, favorable anti-draw down effect and thermal fusion property of the powders can be shown. On the other hand, in the case of Comparative Examples 11 and 12 in which the amount of the coating polymer particles (A-2) is lees than and out of scope of the present invention, it is understood that the thermal fusion property of the powder is lowered. Further, in the case of Comparative Example 13 in which the of the covering polymer particles (A-2) is beyond and out of scope of the present invention, it is understood that the anti-draw down effect is lowered. It is considered that the anti-draw down effect deterioration is due to hydrolysis of thermoplastic polyester resin.

EP 1 932 883 A1

(Example 31 to 34, Comparative Examples 14 and 15, and Reference Example 1)

The anti-draw down effect and the surface property of molded articles were evaluated in the same methods as those of Example 13 for the case viscosity modifier sample (12) obtained in Synthesis Example 7 was compounded with the thermoplastic polyester resin at the compounding ratio shown in Table 9. Results are shown in Table 9.
Table 9

| Example. No. | Ex. 31 | Ex. 32 | Ex. 13 | Ex. 33 | Ex. 34 | Com. Ex. 14 | Com. Ex. 15 | Ref. Ex. 1 |
|---|---|---|---|---|---|---|---|---|
| Viscosity modifier sample No. | (12) | (12) | (12) | (12) | (12) | (12) | (12) | - |
| Amount of Viscosity modifier sample (part(d)) | 0.3 | 3 | 5 | 10 | 15 | 0.05 | 60 | 0 |
| Evaluation results | | | | | | | | |
| Anti-draw down effect. (cm) | 14 | 21 | 24 | 26 | 27 | 8 | 24 | 7 |
| Surface gloss or molded article (%) | 97.1 | 92.1 | 96.8 | 88.2 | 82.3 | - | 77.9 | - |
| Total light transmittance (%) | 93,2 | 92.6 | 92.2 | 92 | 91.8 | - | 77.8 | - |
| Haze value (%) | 1 | 1.1 | 1.2 | 1.2 | 1.4 | - | 21.5 | - |

According to the results shown in Table 9, it can be understood that in the case of Examples 31 to 34 in which the compounding ratio of the viscosity modifier sample is within a scope of the present invention, compositions having favorable anti-draw down effect and surface properties of molded articles are obtained. On the other hand, in the case of Comparative Example 14 in which the mixing ratio of the viscosity modifier sample is less than the range of the present invention, sufficient anti-draw down effect was not obtained and sample suitable for evaluating the gloss and transparency of molded articles were not obtained. Further, in the case of Comparative Example 15 in which the compounding ratio of the viscosity modifier sample is more than the range of the present invention, it is understood that the gloss and transparency of molded articles are worsened. Evaluation was also carried out for the case of no viscosity modifier sample addition as Reference Example 1.

**Claims**

1. A viscosity modifier (A) for thermoplastic polyester resin obtainable by polymerizing (a) 70 to 95% by weight of an aromatic vinyl monomer, (b) 5 to 30% by weight of an alkyl acrylate having an alkyl group with 1 to 8 carbon atoms, and (c) 0 to 10% by weight of other vinyl monomers copolymerizable with both [(a), (b), and (c) are in total 100% by weight].

2. A viscosity modifier (A') for thermoplastic polyester resin **characterized by** covering 100 parts by weight of polymer particles (A-1) with 0.5 to 30 parts by weight of polymer particles (A-2), the polymer particles (A-1) obtained by polymerizing (a) 70 to 96% by weight of an aromatic vinyl monomer, (b) 5 to 30% by weight of an alkyl acrylate having an alkyl group with 1 to 8 carbon atoms and (c) 0 to 10% by weight of other vinyl monomers copolymerizable with both [(a), (b), and (c) are in total 100% by weight], and having a glass transition temperature of 60°C or higher and a volume-average particle diameter of 50 to 500 $\mu$m, and the polymer particles (A-2) having volume-average particle diameter of 0.01 to 0.5 $\mu$m.

3. The viscosity modifier for thermoplastic polyester resin according to claim 1 or 2, wherein the monomers constituting said viscosity modifier (A) or polymer particles (A-1) are those substantially free from epoxy group, isocyanato group, oxazoline group, hydroxy group, carboxy group, alkoxy group, acid anhydride group, or acid chloride group.

4. The viscosity modifier for thermoplastic polyester resin according to claim 1 or 2, wherein said alkyl acrylate (b) constituting said viscosity modifier (A) or polymer particles (A-1) is an alkyl acrylate containing an alkyl group having 1 to 4 carbon atoms.

5. The viscosity modifier for thermoplastic polyester resin according to claim 1 or 2, wherein said alkyl acrylate (b) constituting said viscosity modifier (A) or polymer particles (A-1) is an alkyl acrylate containing an alkyl group having l to 2 carbon atoms.

6. The viscosity modifier for thermoplastic polyester resin according to claim 1 or 2, wherein the weight-average molecular weight of said viscosity modifier (A) or polymer particles (A-1) is 10,000 to 4,000,000.

7. The viscosity modifier for thermoplastic polyester resin according to claim 1 or 2 wherein the weight-average molecular weight of said viscosity modifier (A) or polymer particles (A-1) is 10,000 to 400,000.

8. The viscosity modifier for thermoplastic polyester resin according to claim 1 or 2, wherein the refraction index of said viscosity modifier (A) or polymer particles (A-1) is 1.55 to 1.58.

9. The viscosity modifier for thermoplastic polyester resin according to claim 2, wherein the Vicat softening temperature of said polymer particles (A-2) is 80°C or higher.

10. The viscosity modifier for thermoplastic polyester resin according to claim 2, wherein said polymer particles (A-2) are obtainable by emulsion-polymerizing 60 to 95 parts by weight of a mixture containing 50 to 95% by weight of methyl methacrylate, 5 to 50% by weight of alkyl methacrylate containing an alkyl group having 2 to 8 carbon atoms, and 0 to 20% by weight of another vinyl monomer copolymerizable with them to give a polymer latex, and adding and polymerizing 5 to 40 parts by weight (in total 100 parts by weight) of another mixture containing 20 to 80% by weight of one or more monomers selected from alkyl methacrylates excluding alkyl acrylate and methyl methacrylate, 20 to 80% by weight of methyl methacrylate and 0 to 20% by weight of another vinyl monomer copolymerizable with them in the presence of the produced polymer latex.

11. The viscosity modifier for thermoplastic polyester resin according to claim 2, wherein said polymer particles (A-2) have at least thxee-layered structure formed by polymerizing a mixture containing methyl methacrylate, a copolymerizable monomer and a crosslinkable monomer to obtain a polymer followed by polymerizing a mixture containing alkyl acrylate, a copolymerizable monomer and a crosslinkable monomer to give a double-layer polymer in the presence of the polymer and further polymerizing a monomer mixture containing alkyl (meth)acrylate and a copolymerizable monomer in the presence of the double-layer polymer.

12. The viscosity modifier for thermoplastic polyester resin according to claim 2, wherein said polymer particles (A-2) are of core-shell graft copolymer comprising
(x) 40 to 90 parts by weight of a core formed of a butadiene type copolymer obtainable by polymerizing a monomer mixture containing 30 to 100% by weight of butadiene monomer, 0 to 70% by weight of aromatic vinyl monomer, 0 to 10% by weight of another vinyl monomer copolymerizable with them, and 0 to 5% by weight of a crosslinkable monomer,
(y) 5 to 40 parts by weight of an inner layer shell formed by polymerizing a monomer mixture containing 60 to 98% by weight of aromatic vinyl monomer, 2 to 40% by weight of alkyl (meth)acrylate with hydroxyl or alkoxy group, and 0 to 20% by weight of another vinyl monomer copolymerizable with them, and
(z) 5 to 20 parts by weight of an outer layer shell formed by polymerizing a monomer mixture containing 10 to 100% by weight of aromatic vinyl monomer, 0 to 90% by weight of alkyl (meth)acrylate having an alkyl group with 1 to 8 carbon atoms, and 0 to 50% by weight of another vinyl monomer copolymerizable with them [100 parts by weight in total of (x), (y) and (z)].

13. A thermoplastic polyester resin composition obtainable by mixing 0-1 to 50 parts by weight of viscosity modifier for thermoplastic polyester resin according to claim 1 or 2 with 100 parts by weight of thermoplastic polyester resin (B).

14. The thermoplastic polyester resin composition according to claim 13, wherein said thermoplastic polyester resin (B) is a thermoplastic polyester resin containing polyalkylene terephthalate, polyalkylene naphthalene dicarboxylate, or a unit derived from at least one of an aliphatic diol, an alicyclic diol or a combination thereof and at least one of a dibasic acid.

**15.** The thermoplastic polyester resin composition according to claim 14, wherein said polyalkylene terephthalate is polyethylene terephthalate or co-polyester containing a unit derived from ethylene glycol or dimethanol in combination with isophthalic acid.

**16.** A molded article comprising the thermoplastic polyester resin composition according to claim 13.

**17.** The molded article according to claim 16, wherein the molded article is obtained by extrusion molding.

**18.** The molded article according to claim 16, wherein the molded article is obtained by calendering.

**19.** The molded article according to claim 16, wherein the molded article is obtained by blow molding.

**20.** The molded article according to claim 16, wherein the molded article is obtained by injection molding.

## INTERNATIONAL SEARCH REPORT

| International application No. |
| --- |
| PCT/JP2006/318538 |

A. CLASSIFICATION OF SUBJECT MATTER
*C08L67/00*(2006.01)i, *C08F2/22*(2006.01)i, *C08F212/06*(2006.01)i, *C08F220/06*
(2006.01)i

According to International Patent Classification (IPC) or to both national classification and IPC

B. FIELDS SEARCHED

Minimum documentation searched (classification system followed by classification symbols)
C08L67/00-08, C08F2/00-60, C08F212/00-36, C08F220/00-70

Documentation searched other than minimum documentation to the extent that such documents are included in the fields searched
   Jitsuyo Shinan Koho      1922-1996   Jitsuyo Shinan Toroku Koho   1996-2006
   Kokai Jitsuyo Shinan Koho  1971-2006   Toroku Jitsuyo Shinan Koho   1994-2006

Electronic data base consulted during the international search (name of data base and, where practicable, search terms used)
   WPI

C. DOCUMENTS CONSIDERED TO BE RELEVANT

| Category* | Citation of document, with indication, where appropriate, of the relevant passages | Relevant to claim No. |
| --- | --- | --- |
| X <br><br> Y | JP 3-115466 A (Rohm and Haas Co.),<br>16 May, 1991 (16.05.91),<br>Claims; page 9, lower left column, line 1 to<br>page 10, lower right column, line 3; page 11,<br>upper left column, line 5 to page 13, upper<br>left column, line 2; examples<br>& EP 0411823 B1      & US 5102952 A | 1-7,13,14,<br>16,17,19,20<br>8-12,15,18 |
| X <br> Y <br> A | WO 2004/041934 A1 (Kaneka Corp.),<br>21 May, 2004 (21.05.04),<br>Full text<br>& EP 1559748 A1     & US 2006/0041056 A1 | 1,4-7,13-20<br>2,8-12<br>3 |
| X <br> A | WO 2004/039887 A1 (Kaneka Corp.),<br>13 May, 2004 (13.05.04),<br>Full text<br>& EP 1577345 A      & US 2006/0116496 A1 | 1,4-7,13-20<br>2,3,8-12 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   09 November, 2006 (09.11.06) | Date of mailing of the international search report<br>   21 November, 2006 (21.11.06) |
| --- | --- |
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/318538 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 6-41376 A (Rohm and Haas Co.), | 1,4-6,8, |
|  | 15 February, 1994 (15.02.94), | 13-17,19,20 |
| Y | Full text | 8 |
| A | & EP 0531093 A1         & US 5268438 A | 2,3,7,9-12, |
|  |  | 18 |
|  |  |  |
| X | JP 11-92618 A (Techno Polymer Co., Ltd.), | 1,3-5,13-17, |
|  | 06 April, 1999 (06.04.99), | 19,20 |
| A | Claims; Par. Nos. [0010] to [0029], [0040] | 2,6-12,18 |
|  | to [0043]; examples |  |
|  | (Family: none) |  |
|  |  |  |
| Y | JP 2003-514974 A (Atofina), | 10,11 |
| A | 22 April, 2003 (22.04.03), | 1-9,12-20 |
|  | Claims; Par. Nos. [0021] to [0023] |  |
|  | & EP 1252234 B1         & US 7022768 B1 |  |
|  | & WO 01/38437 A1 |  |
|  |  |  |
| Y | JP 2005-519156 A (General Electric Co.), | 10,11 |
| A | 30 June, 2005 (30.06.05), | 1-9,12-20 |
|  | Claims; Par. Nos. [0038] to [0043] |  |
|  | & EP 1483308 A1         & US 2003/0176541 A1 |  |
|  | & WO 2003/074584 A1 |  |
|  |  |  |
| Y | JP 11-80565 A (Techno Polymer Co., Ltd.), | 2 |
| A | 26 March, 1999 (26.03.99), | 1,3-20 |
|  | Claims; Par. No. [0021] |  |
|  | (Family: none) |  |
|  |  |  |
| A | JP 2005-60593 A (Kaneka Corp.), | 1-20 |
|  | 10 March, 2005 (10.03.05), |  |
|  | Par. Nos. [0034], [0041] |  |
|  | (Family: none) |  |
|  |  |  |
| P,X | WO 2005/103149 A1 (Kaneka Corp.), | 1,2,4-20 |
| P,A | 03 November, 2005 (03.11.05), | 3 |
|  | Full text |  |
|  | & JP 2005-307118 A |  |
|  |  |  |
| A | JP 51-132244 A (Rohm and Haas Co.), | 1-20 |
|  | 17 November, 1976 (17.11.76), |  |
|  | Full text |  |
|  | & US 4086296 A |  |

Form PCT/ISA/210 (continuation of second sheet) (April 2005)

**EP 1 932 883 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1268761 A
- JP 6041376 A
- JP 62187756 A
- JP 62149746 A
- JP 2269755 A

**Non-patent literature cited in the description**

- Polymer Handbook. JOHN WILEY & SONS